# EUROPEAN PATENT APPLICATION

(11) **EP 1 462 005 A1**
(43) Date of publication of application: **29.09.2004**
(21) Application number: 03251962.1
(22) Date of filing: 28.03.2003
(51) Int. Cl.: A21D 13/08, A21D 13/00, A23L 1/0522

(54) **Multipurpose basic filling for baked products**

(71) Applicant: CERESTAR HOLDING B.V., NL-4551 LA Sas van Gent (NL)
(72) Inventor: Peremans, Johan Augusta Maria Antoon, 2180 Ekeren (BE); Sarneel, Frans Johan, 4574 RJ Zuiddorpe (NL)
(74) Representative: Wilkinson, Stephen John

(57) **Abstract**

The present invention relates to a method for preparing a multifunctional basic filling which has a neutral taste, is freeze-thaw stable before and after baking, is not leaking during baking, and which has an effective consistency. The multipurpose filling obtainable by said method is included. Such a multipurpose filling is comprising fat, carbohydrates, proteins and emulsifiers. It can be applied as basic filling for a more completed filling or food compositions and food products. In a typical example the basic filling is comprising 10-20% w/w gluten; 20-35% w/w starch hydrolysates; 5-15% w/w flour, 1-10% w/w starch n-octenyl succinate, and 15-28% w/w fat.

## Description

### Technical Field

The present invention relates to a method for preparing a multifunctional basic filling which has a neutral taste, is freeze-thaw stable before and after baking, is not leaking during baking and is comprising fat, carbohydrates proteins, and emulsifiers.

### Background of the invention

In the food processing industry, high quality, convenience, longer shelf-life, easier storage conditions and high appeal to sight, touch, taste and smell is demanded.

New trends such as more natural, healthier, more nutrious, environmental friendliness, and freshness, are but a few examples of what is requested. Preferably tasty food with more convenience is wanted.

Products comprising tasty fillings are currently prepared according to two distinct processes. The first process is a two-step process wherein the casing is baked separately from the filling, followed by injection of the filling. This prevents dehydration of the filling and/or leaking of the filling during baking of the casing. In the second process, the casing is filled with the filling and the casing is coated to prevent leaking and/or dehydration of the filling.

EP 951 845 provides a process for manufacturing savoury products comprising a filling surrounded by a crisp coating. The filling is deposited inside a flour-based shell coated with beaten egg.

GB 2 172 184 relates to a sandwich-type snack product comprising a bread casing and savoury filling. The casing is prepared from a dough of whole meal flour, dried gluten, egg protein and diacetyl tartaric acid esters. Prior to baking the snack is brushed with melted butter.

There is a need for having a filling which allows a one-step process without the need of additional coating of the casing.

The current invention provides such a product.

### Summary of invention

The current invention relates to a method for obtaining a multipurpose basic filling and said method is comprising the following steps:
a) Selecting the ingredients,
b) Instant mixing of selected ingredients at room temperature for preparing a basic filling,
c) Measuring multifunctionality of basic filling whereby multifunctionality is expressed by measuring i) baking score relating to leaking of filling during baking, ii) freeze-thaw stability of unbaked and baked filling, iii) by consistency measurement, iv) by taste evaluation, and
Characterised in that said basic filling has a neutral taste, is baking stable, is freeze-thaw stable before and after baking, and unbaked filling has an effective consistency.

According to said method the basic filling is giving less than 2 mm water separation in freeze-thaw stability measurement before and after baking of said filling, and consistency of said filling is at least 40Lgr at ambient temperature, and less than 20% of filling is leaking after baking resulting in a baking score of at least 80%.

The current invention relates to a multipurpose basic filling obtainable according to the method previously described.

Such a basic filling is comprising fat, carbohydrates, proteins and emulsifier. Preferably said proteins are vital wheat gluten, whereas the carbohydrates are selected from the group consisting of starch, starch hydrolysates, hydrogenated starch hydrolysates, disaccharides, monosaccharides, polyols and mixtures thereof. The preferred emulsifier is starch n-octenyl succinate.

A typical composition of such a basic filling is comprising:
a) 10-20% w/w gluten;
b) 20-35% w/w starch hydrolysates;
c) 5-15% w/w flour,
d) 1-10% w/w starch n-octenyl succinate, and
e) 15-28% w/w fat.

More specifically said basic filling is comprising:
a) 12-25% w/w gluten;
b) 22-32% w/w starch hydrolysates;
c) 7-12% w/w flour,
d) 2-8% w/w starch n-octenyl succinate
e) 17-25% w/w fat.

Furthermore, the current invention relates to a completed filling comprising the basic filling of the current invention, and sauce or mixtures of sauces.

The current invention further relates to a food composition which is comprising meat, fish, cheese, rice, potato, fruits and/or vegetables and said completed or basic filling.

In addition, the current invention relates to a food product selected from the group consisting of snacks, pies, pizzas, and savoury filled products characterised in that said food product is comprising
a) meat, fish, cheese, rice, potato, fruits and/or vegetables, and further ingredients, and
b) the basic filling of the current invention, or
c) the completed filling.

Furthermore, the current invention relates to the use of a composition of 10-20% w/w gluten; 20-35% w/w starch hydrolysates; 5-15% w/w flour, 1-10% w/w starch n-octenyl succinate, and 15-28% w/w fat as multifunctional filling having freeze-thaw stability before and after baking, having a neutral taste, is not leaking during baking, and unbaked filling has an effective consistency.

### Detailed description

The current invention relates to a method for obtaining a multipurpose basic filling and said method comprises the following steps:
a) Selecting the ingredients,
b) Instant mixing of selected ingredients at room temperature for preparing a basic filling,
c) Measuring multifunctionality of basic filling whereby multifunctionality is expressed by measuring i) baking score relating to leaking of filling during baking, ii) freeze-thaw stability of unbaked and baked filling, iii) by consistency measurement, iv) by taste evaluation, and
Characterised in that said basic filling has a neutral taste, is baking stable, is freeze-thaw stable before and after baking and unbaked filling has an effective consistency.

According to said method the basic filling is giving less than 2 mm water separation in freeze-thaw stability measurement before and after baking of said filling, and consistency of said filling is at least 40Lgr at ambient temperature, and less than 20% of filling is leaking after baking resulting in a baking score of at least 80%.

In order for obtaining a basic filling which is multifunctional and which can be applied as a multipurpose filling, it is important that the basic filling is neutral in taste and that it can be applied in combination with sweet, bitter, sour and salty flavours without any limitation.

A basic filling which is multifunctional can be applied equally well as is, without any extra treatment, or it can be baked, microwaved, fried without any limitation. During baking it is very important that the filling is not leaking or is not dehydrated. The leaking capacity is expressed by its baking score. During the baking test, the filling is surrounded by puff pastry dough and the leaking of the filling during baking is measured. If less than 4 out of 20 pieces of the puff pastry dough are leaking, the filling is considered baking stable and it is giving a baking score of at least 80%.

A multifunctional filling has to be freeze-thaw stable both before and after baking of the filling. The filling is considered freeze thaw stable when there is less then 2 mm water separation on top of the filling, preferably when there is no visible water separation.

The consistency of the filling is measured by viscosity measurement with Stevens Texture Analyzer. A filling which is considered having the correct texture and consistency allows a penetration of the spindle of at least 40 Lgr (load gram) at ambient temperature.

The current invention relates to a multipurpose basic filling obtainable according to the method previously described.

Such a basic filling is comprising fat, carbohydrates, proteins and emulsifier. Preferably said proteins are gluten, more preferably vital wheat gluten, whereas the carbohydrates are selected from the group consisting of starch, starch hydrolysates, hydrogenated starch hydrolysates, disaccharides, monosaccharides, polyols and mixtures thereof. The preferred emulsifier is starch n-octenyl succinate.

Fat can be from animal or vegetable source.

The proteins can be present in the form of gluten. It can be wheat gluten defined as vital wheat gluten, fractions of vital wheat gluten, modified wheat gluten, (partially) hydrolysed wheat gluten and or mixtures thereof. Preferably vital wheat gluten is applied.

Starch hydrolysates are produced by the controlled acid or enzymatic hydrolysis of starch and can be subdivided into two specific categories, maltodextrins and glucose syrups and are characterised by DE number (dextrose equivalent). In fact, DE number is a measurement of the percentage of reducing sugars present in the syrup and calculated as dextrose on a dry weight basis. Maltodextrins have a DE number up to 20 whereas glucose syrups have an DE number greater than 20.

Filling comprising maltodextrins are preferably applied when baking is involved.

The emulsifier is preferably starch n-octenyl succinate which is further characterised by its substitution degree which varies between 0.2 to 3%, preferably between 0.5 to 2.5% (determined by HPLC). The starch n-octenyl succinate can be undextrinized, dextrinized, cooked-up, pregelatinized, stabilised and/or mixtures thereof. These products can be prepared either way: first succinilation followed by dextrination, gelatinisation or cooking-up or having first a dextrinised, gelatinised or cooked-up product followed by succinilation.

For obtaining the stabilised starch n-octenyl succinate, it can be treated with active chlorine and can be prepared according to the process described in EP 0811633.

A typical composition of such a basic filling is comprising:
a) 10-20% w/w gluten;
b) 20-35% w/w starch hydrolysates;
c) 5-15% w/w flour,
d) 1-10% w/w starch n-octenyl succinate, and
e) 15-28% w/w fat.

More specifically said basic filling is comprising:
a) 12-25% w/w gluten;
b) 22-32% w/w starch hydrolysates;
c) 7-12% w/w flour,
d) 2-8% w/w starch n-octenyl succinate
e) 17-25% w/w fat.

The basic filling can be further enriched with skimmed milk powder, defatted soya and the like.

Furthermore, the current invention relates to a completed filling comprising the basic filling of the current invention, and sauce or mixtures of sauces.

Typical examples of sauces are tomato sauce, ketchup, cheese sauce, Bolognaise sauce, buttermilk and the like.

The filling is based on a weight ratio of composition to sauce from 1:1 to 1:2.

Additives such as flavours, edible acids, vitamins, and/or colours can be added to the composition.

Said completed filling can be obtained by mixing first the ingredients of the basic filling followed by addition of sauce. The completed filling can equally well be prepared by mixing all ingredients, including sauce, all together in one pot. This mixing step is optionally followed by freezing, baking, microwaving or frying eventually again followed by freezing.

This completed filling can be consumed as such, as spread onto bread or toast or placed into a casing and/or it can be baked, microwaved, or fried.

The current invention further relates to a food composition which is comprising meat, fish, cheese, rice, potato, fruits and/or vegetables, and said basic or completed completed filling.

The food composition can be consumed as such, but it can also be baked, fried or microwaved. Alternatively the filling is baked, microwaved, fried prior or after storage in deep freezer.

In addition, the current invention relates to a food product selected from the group consisting of snacks, pies, pizzas, and savoury filled products characterised in that said food product is comprising
a) meat, fish, cheese, rice, potato, fruits and/or vegetables, and further ingredients, and
b) the basic filling of the current invention, or
c) the completed filling.
   Further ingredients can be binders, dough, and/or further additives such as flavours, edible acids, vitamins, and/or colours.

The food product can be obtained by simply mixing all the ingredients and eventually followed by baking, microwaving or frying. Prior or after mixing with meat, fish, cheese rice, potato, fruits and/or vegetables the mix is baked, microwaved or fried.

Alternatively, the composition of the current invention can be used as casing and the sauce, or ingredients such as meat, fish, cheese, rice, potato, fruits and/or vegetables can be used as real filling of the casing.

Furthermore, the current invention relates to the use of a composition of 10-20% w/w gluten; 20-35% w/w starch hydrolysates; 5-15% w/w flour, 1-10% w/w starch n-octenyl succinate, and 15-28% w/w fat as multifunctional filling having freeze-thaw stability before and after baking, having a neutral taste, which is not leaking during baking, and whereby unbaked filling has an effective consistency. Said filling can be consumed as such and is suitable for baking, microwaving, or frying, before or after freezing.

The current invention has the following advantages:
- providing a method for preparing a multipurpose filling
- providing a unique multipurpose filling without existing equivalent
- basic filling and completed filing can be used as such, e.g. as spread
- it can be baked, fried, microwaved or frozen prior or after baking process.
- any taste can be obtained by mixing with appropriate sauce and/or food components such as meat, fish, cheese, rice, potato, fruits and/or vegetables.
- The preparation process is a simple one-step process and no leaking or dehydration of the filling is observed.
- Final product is not suffering from detaching between casing and filling.
- The current invention provides a casing and filling together as one uniform basic filling as completed filling that is freeze-thaw stable, short and which has a smooth texture.
- The current invention is allowing a convenient instant and cold preparation.

The current invention is illustrated by way of the following examples.

### Evaluation of Multifunctioality

### 1. Baking test

- baking equipment:
- tray oven: Brandname: Probat
Model: Domino
Type: 2/62/81/20
- the filling was deposited on a puff-paste dough described as follows:

| | |
|---|---|
| Weight of puff-paste | 45 grams |
| Weight of filling | 40 grams |
| Diameter of puff-paste | 12*12 cm |
| Thickness of puff-paste | 3 mm |

- after depositing the filling on the surface of the puff pastry dough, the dough was folded.
- the filling was surrounded with puff pastry for 100%.
- before baking there was a relaxation time of 30 minutes.
- baking conditions:
20 minutes at 220°C. (closed oven valve)
- baking score: if from 20 pieces of filled puff pastry dough less than 4 pieces of puff pastry were leaking during baking, the filling is mentioned as baking stable. (with leaking of filling, the filling has to touch the baking plate), resulting in a baking score of at least 80%

### 2. Freeze-thaw stability

### unbaked applied filling:

- unbaked basic filling applied in application (filling spread on top of pastry dough and folded like a filled Swiss Roll)
- final filled dough product unpacked stored in freezer (-18°C / 1 week)
- thawing of filled dough at ambient T
- repetition of freezing cycle (unpacked / -18°C / 1 week)
- further treatment : 2 possibilities :
   + cut slices of 1 cm thickness of frozen roll , consecutive baking (230°C/5')
   + cut slices of 1 cm thickness of thawed roll, consecutive baking (230°C/5')
- evaluation criteria : visual detection of water separation

### baked applied filling:

- unbaked basic filling applied in application (45 g pastry + 40 g filling)
- baking : 220°C / 20'
- cooling at ambient T
- packing plastic bag / closed
- freezing : -18°C / 1 week
- thawing at ambient T
- further treatment : 2 possibilities :
   + evaluate thawed filling on water separation
   + evaluated warmed-up filling on water separation (heating : oven / 220°C/5')
- evaluation criteria : visual detection of water separation

### unbaked filling:

- freeze basic filling in closed recipient at -18°C / 1 week
- recipient (cup) : diameter = 75 mm / height = 45 mm
- let thaw frozen filling (at 20°C / RH = 60 %) on a wire-net installed on a hopper put on a graduated glass tube
- read off : quantity of water separated (in mm)
- evaluation criteria : > 2 mm water separation : not freeze-thaw stable

### 3. Viscosity / Consistency

- equipment: Stevens Texture Analyzer
- penetration depth : 20 mm
- spindle : cone
- penetration speed : 2mm/s
- cup : diameter : 125 mm / volume (water) 525 cc
- measurement immediately after preparation of the multipurpose filling
- evaluation criteria : min 40 Lgr. at 23°C : giving a correct structure, meaning viscosity/consistency, to be baking stable

### 4. Taste

- The taste was evaluated by a taste panel as being neutral

### Example 1

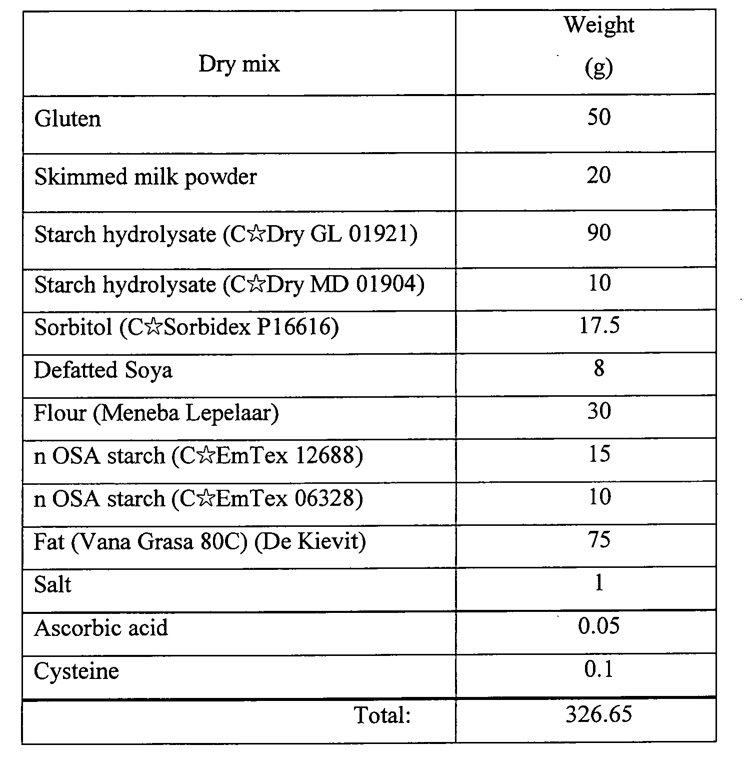

75 g of dry mix was mixed with 150 g buttermilk followed by 12.5g pregelatinised starch (C 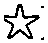 Hiform A 12747). After stirring for about 3 minutes, about 7g of said filling was taken and 3g apples were added and flavoured with cinnamon.
The completed filling was packed in pastry dough and baked during 15 minutes at 220°C.

### Example 2

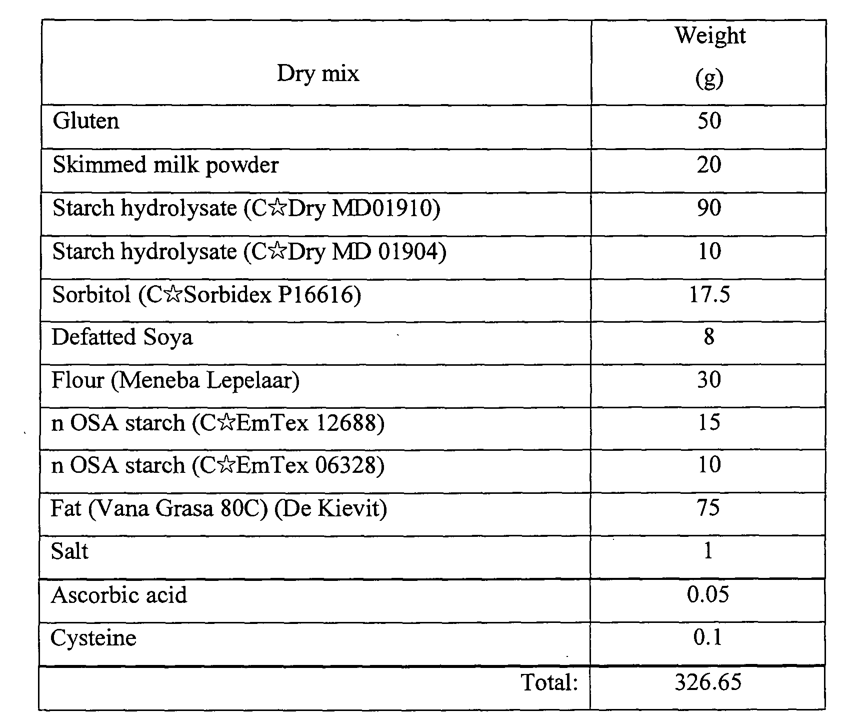

To 150 g of said dry mix was added 138.5 g of cheese sauce (prepared from one package of KNORR cheese sauce which was dissolved in 220 ml of water, brought to boil and allowed to boil for 1 minute), followed by 58 g philadelphia nature and 3.5 g Parmesan Ex.

The completed filling was mixed for about 3 minutes.

To make the snacks, a layer of said savoury mix was placed with a little bit of ham on a puff paste. The weight of the filling together with the dough amounted to about 100 g.

We placed these rolls in the refrigerator till they became hard, so we could easily cut them in small pieces.

This filling was baked during 15 minutes at 220 °C.

### Example 3

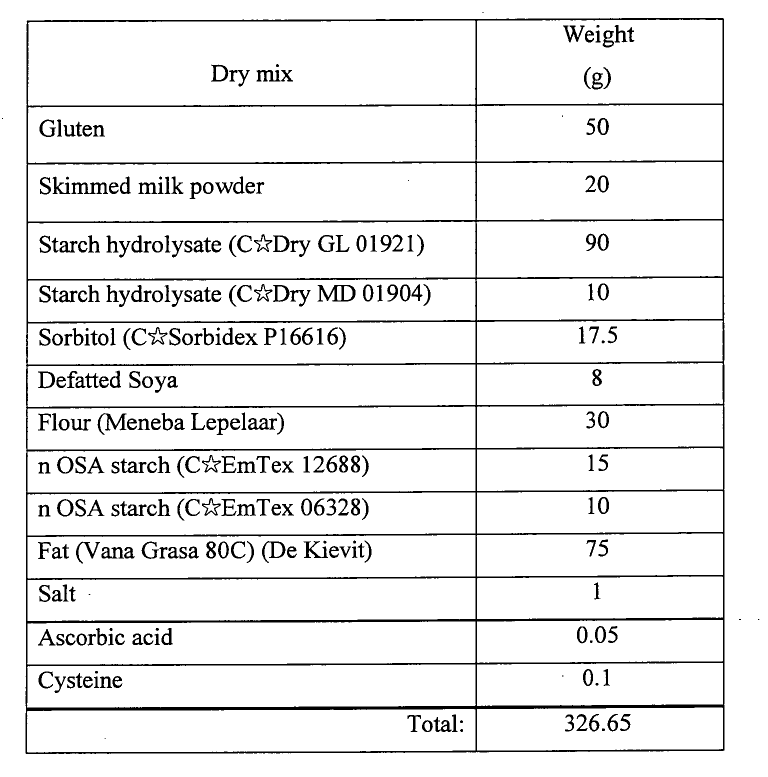

150 g dry mix was mixed with 25 g of pregelatinised starch (C 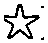 HiForm A 12747). 300 g buttermilk (strawberry taste) was added, followed by 50 g of margarine.

The completed filling was mixed for about 3 minutes.
The thus prepared filling was utilised as spread on toast.

### Example 4

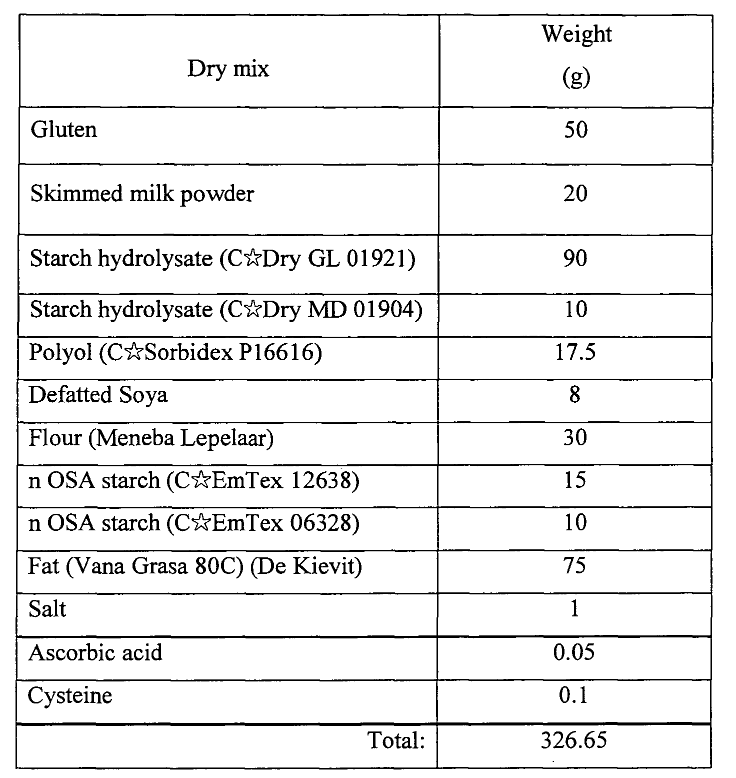

300 g of dry mix was added to 300g Bolognaise sauce, and
20 g pregelatinised distarch phosphate (C 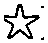 Pulp Tex 12930)
Everything was mixed for about 3 minutes and the savoury filling was cooled down for 30 minutes in the refrigerator. The savoury filling was rolled into strands. Each strand was cut in pieces of ± 40 g. These pieces were rolled in a solution of Batter starch/ water of 50 g/55 g and afterwards in breath crumbs.

It was feasible to prepare the croquet without breath crumbs and fry it, since there is a formation of a crunchy layer at the outside.
Frozen croquets are frying stable.

## Claims

1. A method for obtaining a multipurpose basic filling and said method is comprising the following steps:
a) Selecting the ingredients,
b) Instant mixing of selected ingredients at room temperature for preparing a basic filling,
c) Measuring multifunctionality of basic filling whereby multifunctionality is expressed by measuring i) baking score relating to leaking of filling during baking, ii) freeze-thaw stability of unbaked and baked filling, iii) consistency and, iv) by taste evaluation, and
**Characterised in that** said basic filling has a neutral taste, is baking stable, is freeze-thaw stable before and after baking and unbaked filling has an effective consistency.

2. A method according to claim 1 **characterised in that** said basic filling is giving less than 2 mm water separation in freeze-thaw stability measurement before and after baking of said filling, and consistency of said filling is at least 40Lgr at ambient temperature, and less than 20% of filling is leaking after baking resulting in a baking score of at least 80%.

3. A multipurpose basic filling obtainable according to the process of claim 1.

4. A basic filling according to claim 3 **characterised in that** it is comprising fat, proteins, carbohydrates and emulsifier.

5. A basic filling according to claim 4 **characterised in that** proteins are vital wheat gluten.

6. A basic filling according to claim 4 or 5 **characterised in that** carbohydrates are selected from the group consisting of starch, starch hydrolysates, hydrogenated starch hydrolysates, disaccharides, monosaccharides, polyols and mixtures thereof.

7. A basic filling according to anyone of claims 4 to 6 **characterised in that** the emulsifier is starch n-octenyl succinate.

8. A basic filling according to anyone of claims 4 to 7 **characterised in that** it is comprising:
a) 10-20% w/w gluten;
b) 20-35% w/w starch hydrolysates;
c) 5-15% w/w flour,
d) 1-10% w/w starch n-octenyl succinate, and
e) 15-28% w/w fat.

9. A basic filling according to claim 8 **characterised in that** it is comprising:
a) 12-25% w/w gluten;
b) 22-32% w/w starch hydrolysates;
c) 7-12% w/w flour,
d) 2-8% w/w starch n-octenyl succinate
e) 17-25% w/w fat.

10. A completed filling comprising
a) a basic filling according to anyone of claims 3 to 9, and
b) sauce or mixtures of sauces.

11. A food composition **characterised in that** it is comprising
a) meat, fish, cheese, rice, potato, fruits and/or vegetables, and
b) a basic filling according to claim 3 to 9, or
c) a completed filling according to claim 10.

12. A food product selected from the group consisting of snacks, pies, pizzas, and savoury filled products **characterised in that** said food product is comprising
a) meat, fish, cheese, rice, potato, fruits and/or vegetables, and further ingredients, and
b) a basic filling according to anyone of claims 3 to 9, or
c) a completed filling according to claim 10.

13. Use of a composition of 10-20% w/w gluten; 20-35% w/w starch hydrolysates; 5-15% w/w flour, 1-10% w/w starch n-octenyl succinate, and 15-28% w/w fat as multifunctional filling having freeze-thaw stability before and after baking, having a neutral taste, is not leaking during baking, and unbaked filling has an effective consistency.
